# EUROPÄISCHE PATENTSCHRIFT

(11) **EP 2 267 285 B1**
(45) Veröffentlichungstag und Bekanntmachung des Hinweises auf die Patenterteilung: **09.08.2017**
(21) Anmeldenummer: 10005968.2
(22) Anmeldetag: 10.06.2010
(51) Int. Cl.: F02B 37/02, F02B 37/16, F02B 37/18, F01D 25/26, F02C 6/12

(54) **Abgasbaugruppe**
Exhaust assembly
Module d'échappement

(30) Priorität: 24.06.2009 DE 102009030482
(43) Veröffentlichungstag der Anmeldung: 29.12.2010
(73) Patentinhaber: Benteler Automobiltechnik GmbH & Co. KG, 33102 Paderborn (DE)
(72) Erfinder: Smatloch, Christian, 33100 Paderborn (DE); Grußmann, Elmar, 33184 Altenbeken-Buke (DE)
(74) Vertreter: Griepenstroh, Jörg

(56) Entgegenhaltungen:
- WO-A1-2004/099586
- DE-A1- 10 022 052
- DE-A1- 10 230 934
- DE-A1- 19 709 879

## Beschreibung

Die Erfindung betrifft eine Abgasbaugruppe für eine Verbrennungskraftmaschine mit den Merkmalen des Patentanspruchs 1.

Verbrennungskraftmaschinen für Kraftfahrzeuge werden in zunehmendem Maße durch Turbolader aufgeladen, da hierdurch der Kraftstoffverbrauch reduziert werden kann. Da auch das Gewicht der Turbolader Einfluss auf den Kraftstoffverbrauch hat, wird angestrebt besonders leichte und kompakte Abgasanlagen zu entwickeln, zumal der Bauraum innerhalb des Motorraums immer geringer wird. Turbolader sind während ihres Einsatzes erheblichen mechanischen und insbesondere höchsten thermischen Belastungen ausgesetzt. Um dennoch eine gewünschte Lebensdauer zu erzielen, wurden bereits viele Lösungsvorschläge entwickelt, die darauf abzielen thermisch induzierte Spannungen zu vermeiden und die Wechselfestigkeit des Turboladers zu erhöhen. Ein Beispiel hierfür ist die in der DE 100 22 052 A1 beschriebene Lösung zur Entkoppelung von Abgasführenden Bauteilen und tragenden bzw. dichtenden Außenstrukturen. Auf diese Weise lassen sich Bauteile mit geringeren Oberflächentemperaturen darstellen.

Ein weiterer wesentlicher Aspekt ist die Steigerung der Leistungsdichte, insbesondere von Dieselmotoren. Hierbei stellt die Aufladetechnik der Verbrennungskraftmaschine ein wesentliches Element dar. Es zählt bereits zum Stand der Technik, zwei Turbolader in Stufenbauweise einzusetzen, um auch bei geringen Drehzahlen genügend Ladedruck und somit ein hinreichendes Drehmoment zu erzielen (DE 198 37 978 B4). Es zählt auch eine Kombination aus mechanischem Kompressor und Turbolader zum Stand der Technik (AutoBild 36/2005, S. 16). Allerdings ist hier zum einen die Anordnung der Bauteile komplex sowie der Aufwand für die Regelung sehr hoch. Zum anderen nimmt die Bauteiloberfläche stark zu. Dies führt jedoch zu einer starken Abkühlung des Abgases. Das ist wiederum negativ im Hinblick auf die angestrebten niedrigen Emissionswerte, da ein nachgeschalteter Katalysator erst bei erhöhten Abgastemperaturen optimal arbeitet. Andersherum entsteht bei hohen Lasten viel Wärme, die auf Grund der vergrößerten Oberfläche in den Motorraum eingebracht wird. Das kann wiederum zu Problemen mit diversen Kunststoffbauteil und weiteren Aggregaten führen, die sich im Motorraum befinden.

In MTZ 5/2005, Jahrgang 66, S. 334 - 344, wird eine Stufenauflandung eines Sechszylinder-Dieselmotors beschrieben, bei welchem zwei serienmäßige Turbolader mit einem Krümmer verbunden sind und durch entsprechende Schalt-und Riegelorgane ergänzt wurden. Insgesamt ergibt sich eine relativ starke Zergliederung der Abgasbaugruppe, was auf Grund der Schraubverbindungen zu einem erhöhten Montageaufwand, zu einer Vergrößerung der Oberfläche und der damit einhergehenden Abkühlung des Abgases führt.

Aus der DE 100 22 052 A1 ist ein Turbinengehäuse für Abgasturbolader bekannt, das zur Reduzierung der Masse und Wärmekapazität im Bereich eines zentralen Auslassrohrs aus tiefgezogenen Blechen in Form von Halbschalen gebildet ist.

In der DE 197 09 879 A1 wird eine Abgasbaugruppe mit einem Abgaskrümmer offenbart, der mit einem Abgaseinlass eines Verteilerbauteils verbunden ist, wobei in dem Verteilerbauteil ein Stellorgan angeordnet ist, das dazu geeignet ist, Abgas einem Niederdruckanschluss und/oder einem Hochdruckanschluss des Verteilerbauteils zuzuleiten. Hochdruckseitig ist ein Hochdruckturbinengehäuse einer Hochdruckturbine mit dem Verteilerbauteil verbunden. Niederdruckseitig ist ein Niederdruckturbinengehäuse mit einer Niederdruckturbine mit dem Verteilerbauteil verbunden. Ein Verbindungskanal verläuft durch das Verteilerbauteil. Er verbindet einen Hochdruckabgasauslass des Hochdruckturbinengehäuses mit einem Niederdruckabgaseinlass des Niederdruckturbinengehäuses. Das Verteilerbauteil ist bei dieser Bauform ein gegossenes Bauteil.

Hiervon ausgehend liegt der Erfindung die Aufgabe zu Grunde, eine Auflademaschine aufzuzeigen, die in der Lage ist, auch bei zweistufiger Aufladung eine zu starke Abkühlung des Abgases soweit wie möglich zu reduzieren und die zudem möglichst kompakt und gleichzeitig leicht ist, um die Wärmeabstrahlung zu verringern und das Gewicht zu minimieren.

Diese Aufgabe ist bei einer Abgasbaugruppe mit den Merkmalen des Patentanspruchs 1 gelöst.

Die Unteransprüche betreffen vorteilhafte Weiterbildungen.

Die erfindungsgemäße Abgasbaugruppe weist vier Komponenten auf: einen Abgaskrümmer, ein Verteilerbauteil und zwei Turbinen. Zunächst wird von dem aus dem Verbrennungsmotor austretenden Abgas ein Abgaskrümmer durchströmt, welcher das Abgas gesammelt einem Verteilerbauteil zuführt. Das Verteilerbauteil ist das zentrale Element der Abgasbaugruppe. An das Verteilerbauteil ist Hochdruckturbinengehäuse und ein Niederdruckturbinengehäuse unmittelbar angeschlossen. Das Verteilerbauteil besitzt dementsprechend einen Hochdruckanschluss und einen Niederdruckanschluss für die jeweiligen Turbinen. Ferner verläuft durch das Vertellerbauteil ein Verbindungskanal, welcher von der Hochdruckturbine zur Niederdruckturbine führt und das aus der Hochdruckturbine austretende Abgas zur Niederdruckturbine überleitet. In welchem Umfang die Hochdruckturbine und die Niederdruckturbine mit Abgas beaufschlagt werden, wird unter anderem durch ein Stellorgan beeinflusst, das sich ebenfalls in dem Verteilerbauteil befindet.

Das Verteilerbauteil ist auf Grund seiner vielfältigen Funktion ein komplexes Bauteil, das zu diesem Zweck vorzugsweise durch Urformen hergestellt ist, d.h. ein Gussbauteil ist. Die Innen- und Außengehäuse der Niederdruck- und Hochdruckturbine sind hingegen aus umgeformten Blechschalen gebildet Mit diesen Blechschalen kann auch ein Anschluss zur weiterführenden Abgasanlage verbunden sein. Man spricht auch von gebauten Gehäusen im Unterschied zu gegossenen Gehäusen.

Die erfindungsgemäße Abgasbaugruppe zeichnet sich auf Grund der unmittelbaren Verbindung der beiden Turbinen mit dem zentralen Verteilerbauteil durch eine ausgesprochen leichte und kompakte Bauweise aus. Die Turbinengehäuse sind sehr nah benachbart. Dadurch verkürzen sich die Strömungswege zwischen den beiden Turbinen. Das führt dazu, dass die Oberfläche an der gesamten Abgasbaugruppe stark reduziert ist. Durch die reduzierte Oberfläche wird weniger Wärme abgegeben, was in einem besseren Anspringverhalten des Katalysators beim Start der Verbrennungskraftmaschine und zu einer reduzierten Wärmeabgabe unter Höchstbelastung führt. Zudem kann durch kurze Strömungswege und die kompakte Bauweise sowohl Gewicht als auch Bauraum innerhalb des knapp bemessenen Motorraums eines Kraftfahrzeugs eingespart werden.

In vorteilhafter Weiterbildung besitzt das Verteilerbauteil einen Bypasskanal, durch welchen Abgas vom Hochdruckabgasauslass des Hochdruckturbinengehäuses unter Umgehung der Niederdruckturbine in einen Abgasauslass des Verteilerbauteils einleitbar ist. Entscheidend für die kompakte Bauweise ist, dass der Bypasskanal unmittelbar in den Abgasauslass der Verteilerbaugruppe mündet, so dass keine externe Leitungsführung außerhalb der Verteilerbaugruppe für den Bypass notwendig ist.

Der Bypasskanal ist durch ein Bypassventil sperrbar, das ebenso wie Stellorgan unmittelbar in dem Verteilerbauteil angeordnet ist. Zusätzlicher Bauraum wird allenfalls für die notwendige Aktuatorik zur Ansteuerung des Bypassventils benötigt.

Der Abgaskrümmer besitzt zur thermischen Isolierung einen Luftspalt zwischen seinem Innengehäuse und seinem Außengehäuse. Auch das Niederdruck- und das Hochdruckturbinengehäuse weisen jeweils einen Luftspalt auf, der sich auch dort zwischen dem jeweiligen Innen- und Außengehäuse befindet.

Die Blechdicke der Innengehäuse ist regelmäßig signifikant geringer als die Blechdicke der Außengehäuse. Dadurch nimmt das Innengehäuse weniger Wärme auf, was sich ebenfalls positiv auf das Anspringverhalten des Katalysators bzw. ebenfalls positiv auf die Abgastemperatur auswirkt. Die jeweiligen Innengehäuse haben primär eine abgasleitende Funktion, während den Außengehäusen der jeweiligen Bauteile nur eine tragende Funktion zukommt. Zusätzlich zu der tragenden Funktion bewirken die Außengehäuse eine Abdichtung der Abgasbaugruppe gegenüber der Umgebung.

Es wird als besonders vorteilhaft angesehen, wenn die drei vorhandenen Luftspalte voneinander getrennt bleiben. Insbesondere ist der Luftspalt im Abgaskrümmer getrennt von den Luftspalten der Niederdruck- und der Hochdruckturbinengehäuse. Auf diese Weise wird der Wärmeeintrag in den Luftspalt des Abgaskrümmers nicht sofort in die Luftspalte der Niederdruck- und Hochdruckturbinengehäuse weitergeleitet. Das führt zu einer thermischen Entlastung der beiden Turbinen.

Die erfindungsgemäße Abgasbaugruppe kommt vollständig ohne Schraubverbindungen aus. Schraubverdingungen setzen entsprechende gewichtserhöhende Flansche voraus und können potentiell zu Undichtigkeiten führen. Die Komponenten der erfindungsgemäßen Abgasbaugruppe sind vorzugsweise stoffschlüssig miteinander verbunden, insbesondere verschweißt. Die stoffschlüssige Verbindung führt nicht zu Undichtigkeiten, vermeidet schwere Flansche und ermöglicht schmale und kompakte Verbindungsbereiche, was sich insgesamt gewichtsreduzierend auswirkt.

Die verschweißten Außengehäuse der Komponenten der Abgasbaugruppe bilden zusammen mit dem Verteilerbaüteil die tragende Struktur. Diese Struktur wird dadurch unterstützt, dass im Bereich der Niederdruck- und Hochdruckturbinen entsprechende Lagerflansche vorgesehen sind, um die Abgasbaugruppe mit dem Frischluftansaugtrakt der Turbine zu verbinden. Durch diese Lagerflansche werden die Blechschalen der Außengehäuse zusätzlich ausgesteift.

Da die Luftspalte des Abgaskrümmers und der Turbinen voneinander getrennt sein sollen, ist vorgesehen, dass die Außengehäuse der Niederdruck- und Hochdruckturbinenstufen stoffschlüssig mit dem Außengehäuse des Abgaskrümmers verbunden sind. Das Außengehäuse umgreift der Niederdruck- und Hochdruckturbinenstufe das Außengehäuse des Abgaskrümmers. Das Außengehäuse des Abgaskrümmers stellt das Verbindungsglied zwischen einem Kopfflansch des Abgaskrümmers dar, der an dem Zylinderkopf der Verbrennungskraftmaschine festgelegt wird, und dem Verteilerbauteil. Dementsprechend erstreckt sich auch der Luftspalt bis zum Verteilerbauteil. Theoretisch könnte dort das Außengehäuse der Hochdruck- und Niederdruckturbinenstufen beginnen, was allerdings zu einer Konzentrierung mehrerer Schweißnähte führen würde. Um Spannungsspitzen in diesem Anbindungsbereich zu vermeiden wird das Außengehäuse der Niederdruck- und Hochdruckturbinenstufen direkt mit dem Außengehäuse des Abgaskrümmers verbunden, und zwar derart, dass das Außengehäuse des Abgaskrümmers in die anderen genannten Außengehäuse eingreift. Durch die unmittelbare Verschweißung der Außengehäuse miteinander ergibt sich ein sehr starrer Verbund zwischen dem Abgaskrümmer und den Außengehäusen der Turbinen. Benachbart der Verbindungsbereiche überlappen sich dadurch die Luftspalte des Abgaskrümmers und der Turbinen, wobei sie jedoch nicht fluidleitend miteinander verbunden sind.

Die erfindungsgemäße Abgasbaugruppe lässt sich so gestalten, dass das Innengehäuse der Niederdruck- und Hochdruckturbinen unter Ausbildung eines Schiebesitzes mit dem Verteilerbauteil gekoppelt ist. Durch Schiebesitze können thermisch induzierte Längenänderungen der einzelnen Gehäuse ausgeglichen werden, was die Dauerfestigkeit der gesamten Abgasbaugruppe erhöht.

Dadurch, dass sich der Luftspalt der Turbinengehäuse bis zu dem Luftspalt des Abgaskrümmers erstreckt, ist auch das Verteilerbauteil luftspaltisoliert, und zwar durch die Luftspalte der Turbinengehäuse. Der überwiegende Oberflächenbereich des Verteilerbauteils ist auf diese Weise isoliert.

Auch das Innengehäuse des Abgaskrümmers kann unter Ausbildung eines Schiebesitzes mit dem Verteilerbauteil verbunden sein. Gleiches gilt auch für einen Längenabschnitt des Verbindungskanals, der ebenfalls unter Ausbildung eines Schiebesitzes mit dem Verteilerbauteil verbunden ist. Dadurch wird das zentrale Verteilerbauteil, das sehr variablen thermischen Belastungen ausgesetzt ist, von Spannungen, die durch thermisch induzierte Längenänderungen hervorgerufen werden, soweit es möglich ist, freigehalten.

Zentrales Element der Abgasbaugruppe ist also das gießtechnisch hergestellte Verteilerbauteil, das nach entsprechender mechanischer Bearbeitung das Stellorgan und das Bypassventil aufnimmt. Ferner kann das Verteilerbauteil einen Abgasauslass aufweisen, der zur Weiterleitung des die Abgasbaugruppe durchströmenden Abgases an weiterführende Komponenten des Abgasstrangs dient. Daher kann auch der Niederdruckabgasauslass der Niederdruckturbine unmittelbar in einen Abgasauslass des Verteilerbauteils münden.

Die erfindungsgemäße Abgasbaugruppe ermöglicht eine flexible Auswahl von Werkstoffen je nach thermischer Belastung und gewünschter Festigkeit. Das zentrale Verteilerbauteil wird fast vollständig von der Blechstruktur umgeben, wodurch die Wärmeverluste minimiert werden können. Sehr dünne Innenstrukturen, mit Wanddicken kleiner als 1,5 mm verbessern die Emissionswerte der eingeschlossenen Verbrennungskraftmaschine durch ein verbessertes Katalysatoranspringverhalten.

Die Erfindung wird nachfolgend anhand eines in ein zwei Zeichnungen dargestellten Ausführungsbeispiels erläutert.

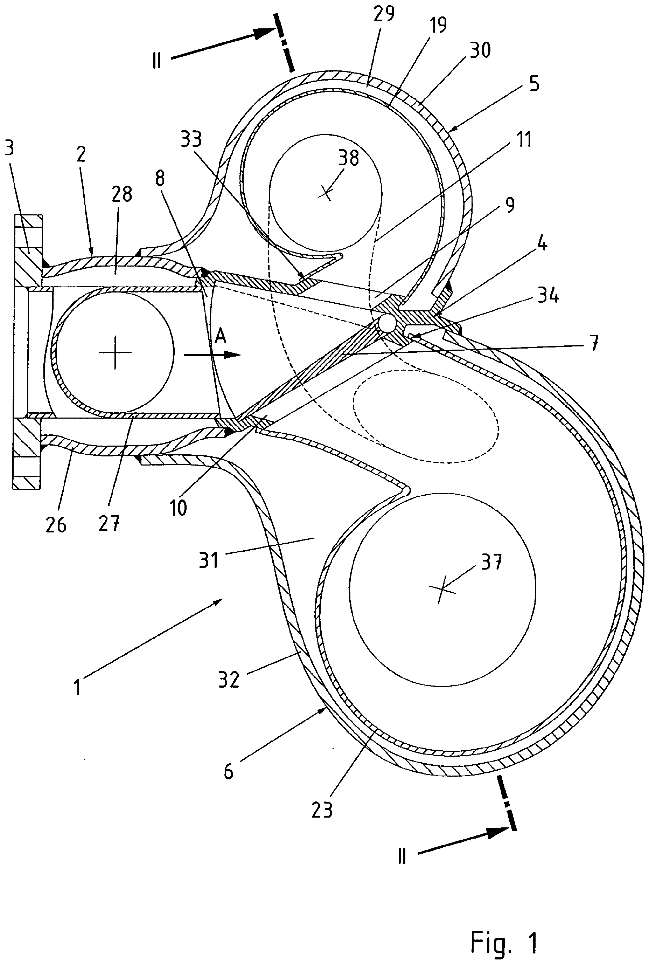

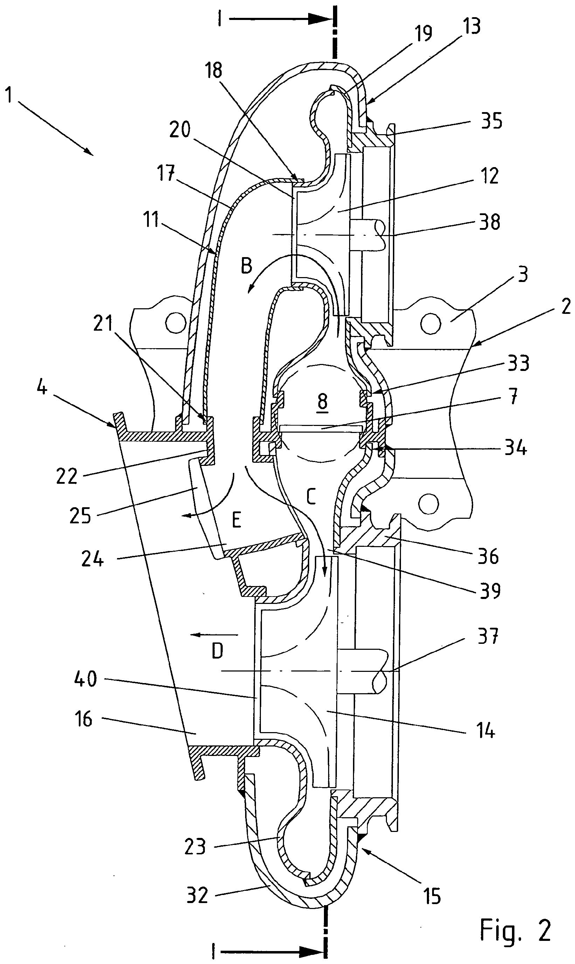

Die Figuren 1 und 2 zeigen zwei Schnittdarstellungen ein und derselben Abgasbaugruppe. Die jeweiligen Schnittebenen sind mit I - I bzw. II- II.
Figur 1 zeigt eine erste Schnittdarstellung I - I durch eine Abgasbaugruppe 1. Die Lage der Schnittebene I - I ist in Figur 2 dargestellt.
Figur 2 zeigt die Schnittebene II - II der Figur 1. Die Lage der Schnittebene II - II ist in Figur 1 zu erkennen.

Die Abgasbaugruppe 1 umfasst einen Abgaskrümmer 2 der über einen Kopfflansch 3 mit einer nicht näher dargestellten Verbrennungskraftmaschine verbunden werden kann. Der Abgaskrümmer 2 ist mehrflutig ausgestaltet. Die Schnittebene I - I zeigt unter anderem einen Schnitt durch den Abgaskrümmer 2, der in ein zentrales Verteilerbauteil 3 mündet, das als Gussbauteil hergestellt ist. In der Bildebene der Figur 1 ist oberhalb des Verteilerbauteils 4 ein Hochdruckturbinengehäuse 5 angeordnet. Unterhalb des Verteilerbauteils 4 befindet sich ein größeres Niederdruckturbinengehäuse 6. Ein Stellorgan 7 in Form einer Klappe innerhalb des Verteilerbauteils 4 kann von der dargestellten unteren Stellung in die mit unterbrochener Linie dargestellte obere Stellung verlagert werden und so das in das Verteilerbauteil 4 in Richtung des Pfeils A eintretende Abgas nicht nach oben, sondern nach unten umlenken. Wenn sich das Stellorgan 7 in der oberen Position befindet, wird ein Hochdruckanschluss 9 verschlossen, so dass das Abgas über einen stutzenartigen Niederdruckanschluss 10 des Verteilerbauteils 4 unmittelbar in einem Niederdruckabgaseinlass 39 des Niederdruckturbinengehäuses 6 eingeleitet wird. Zwischenstellungen des Stellorgans 7 sind möglich.

In der dargestellten Position würde das Abgas von dem Hochdruckturbinengehäuse 5 über einen Verbindungskanal 11, der in Figur 1 strichpunktiert gezeichnet ist, dem Niederdruckturbinengehäuse 6 zugeleitet werden. Der in Figur 2 eingezeichnete Pfeil B zeigt, wie das Abgas von dem Abgaseinlass 8 des Verteilerbauteils 4 das Turbinenrad 12 der Hochdruckturbine 13 durchströmt und über den Verbindungskanal 11 in Richtung des Pfeils C einem Turbinenrad 14 der Niederdruckturbine 15 zuströmt und von dort in Richtung des Pfeils D über einen Niederdruckabgasauslass 40 der Niederdruckturbine 15 in einen Abgasauslass 16 des Verteilerbauteils 4 mündet.

Der Verbindungskanal 11 besitzt zwei Längenabschnitte, nämlich einen oberen Längenabschnitt 17 aus einem tiefgezogenen, dünnwandigen Blech und einen unteren Längenabschnitt 22, der im Verteüerbauteil 4 verläuft. Der obere Längenabschnitt 17 ist unter Ausbildung eines Schiebesitzes 18 mit einem Innengehäuse 19 der Hochdruckturbine 13 verbunden und zwar an den Hochdruckabgasauslass 20 angeschlossen. Darüber hinaus ist dieser aus Blech bestehende Längenabschnitt 17 des Verbindungskanals 11 über einen Schiebesitz 21 mit dem Verteilerbauteil 4 gekoppelt. Das ist möglich, da sich die Bewegungsrichtungen der Schiebesitze 18, 21 unterscheiden und das Bauteil unverlierbar einerseits mit dem Verteilerbauteil 4 und andererseits mit dem Innengehäuse 19 der Hochdruckturbine 13 verbunden ist. Der untere Längenabschnitt 22 des Verbindungskanals 11 verläuft innerhalb des Verteilerbauteils 4 und mündet in ein Innengehäuse 23 der Niederdruckturbine 15, das genauso wie das Innengehäuse 19 der Hochdruckturbine 13 aus Blechschalen aufgebaut ist.

Zudem ist ein Bypasskanal 24 in dem unteren Längenabschnitt 22 des Verbindungskanals 11 ausgebildet, welcher in der Darstellung der Figur 2 durch ein Bypassventil 25 gesperrt ist. Wenn das Bypassventil 25 geöffnet wird, kann Abgas unmittelbar von dem Verbindungskanal 11 in Richtung des Pfeils E in den Abgasauslass 16 des Verteilerbauteils 4 einströmen. Der Abgasauslass 16 besitzt Flansche, um ihn mit weiteren nachgeschalteten Komponenten des Abgasstrangs zu verbinden.

Insbesondere in Figur 1 ist zu erkennen, dass nahezu die gesamte Abgasbaugruppe luftspaltisoliert ist. Der Abgaskrümmer 2 besitzt zu diesem Zweck ein abdichtendes und tragendes Außengehäuse 26, das einerseits mit dem Kopfflansch 3 verschweißt ist und andererseits den Abgaseinlass 8 des Verteilerbauteils 4 umgreift, der zu diesem Zweck einen stufenförmige Absatz aufweist. Innerhalb des Außengehäuses 26 befindet sich ein Innengehäuse 27. Zwischen dem Außengehäuse 26 und dem Innengehäuse 27 befindet sich ein Luftspalt 28. Das Innengehäuse 27 ist bei diesem Ausführungsbeispiel fest mit dem Kopfflansch 3 verschweißt und greift über einen Schiebesitz in den Abgaseinlass 8 des Verteilerbauteils 4. Dieser Luftspalt 28 ist getrennt von einem Luftspalt 29, der zwischen dem Innengehäuse 19 und einem Außengehäuse 30 des Hochdruckturbinengehäuses 5 ausgebildet ist. Ebenso ist der Luftspalt 28 getrennt von einem Luftspalt 31 zwischen dem Innengehäuse 23 und einem tragenden Außengehäuse 32 des Niederdruckturbinengehäuses 6 angeordnet. Die Außengehäuse 30, 32 der Hochdruck- und Niederdruckturbinen 13, 15 sind auf ihren dem Abgaskrümmer 2 zugewandten Enden außenseitig mit dem Außengehäuse 26 des Abgaskrümmers 2 verschweißt. Die anderen, dem Abgaskrümmer 2 entfernten Enden der Außengehäuse 30, 32 sind mit dem Verteilerbauteil 4 verschweißt. Diese Enden liegen in einen entsprechenden Befestigungssteg des Verteilerbauteils 4 ein.

Es ist zu erkennen, dass das Verteilerbauteil 4 nahezu vollständig von den Gehäusen der Hochdruck- und Niederdruckturbinen 13, 15 umschlossen ist. Zudem fällt auf, die Blechdicke der Außengehäuse 30, 32 wesentlich größer ist als die Blechdicke der jeweiligen Innengehäuse 19, 23. Zudem ist anzumerken, dass die Innengehäuse 19, 23 in bekannter Weise schneckenförmig konfiguriert sind, so dass die Luftspaltbreite der in den Gehäusen der Hochdruckturbine 13 bzw. der Niederdruckturbine 15 erheblich variiert.

Um thermische Spannungen von dem zentralen Verteilerbauteil 4 fernzuhalten sind die Innengehäuse 19, 23 der Hochdruckturbine 13 bzw. der Niederdruckturbine 15 über Schiebesitze 33, 34 mit dem Hochdruckanschluss 9 des Verteilerbauteils 4 bzw. dem der Niecferdruckanschluss 10 des Verteilerbauteils 4 verbunden. Dadurch stehen die jeweiligen Außen- und Innengehäuse 30, 19, 23, 32 der Hochdruckturbine 13 und der Niederdruckturbine 15 einerseits über das Verteiferbauteil 4 mittelbar miteinander in Verbindung. Andererseits ergibt sich eine Verbindung über Lagerflansche 35, 36, die zur Anbindung der Abgasbaugruppe 1 an den ansaugseitigen Teil / frischluftseitigen Teil der Lagerbaugruppe dienen.

Es ist in Figur 2 zu erkennen, dass die Lagerflansche 35, 36 in zueinander parallelen Ebenen liegen. Mit anderen Worten liegen die Drehachsen 37, 38 der Turbinenräder 12, 14 bei diesem Ausführungsbeispiel parallel zueinander.

### Bezugszeichen:

- 1 -: Abgasbaugruppe
- 2 -: Abgaskrümmer
- 3 -: Kopfflansch
- 4 -: Verteilerbauteil
- 5 -: Hochdruckturbinengehäuse
- 6 -: Niederdruckturbinengehäuse
- 7 -: Stellorgan
- 8 -: Abgaseinlass
- 9 -: Hochdruckanschluss
- 10 -: Niederdruckanschluss
- 11 -: Verbindungskanal
- 12 -: Turbinenrad
- 13 -: Hochdruckturbine
- 14 -: Turbinenrad
- 15 -: Niederdruckturbine
- 16 -: Abgasauslass
- 17 -: oberer Längenabschnitt
- 18 -: Schiebesitz
- 19 -: Innengehäuse
- 20 -: Hochdruckabgasauslass
- 21 -: Schiebesitz
- 22 -: unterer Längenabschnitt
- 23 -: Innengehäuse
- 24 -: Bypasskanal
- 25 -: Bypassventil
- 26 -: Außengehäuse
- 27 -: Innengehäuse
- 28 -: Luftspalt
- 29 -: Luftspalt
- 30 -: Außengehäuse
- 31 -: Luftspalt
- 32 -: Außengehäuse
- 33 -: Schiebesitz
- 34 -: Schiebesitz
- 35 -: Lagerflansch
- 36 -: Lagerflansch
- 37 -: Drehachse
- 38 -: Drehachse
- 39 -: Niederdruckabgaseinlass
- 40 -: Niederdruckabgasauslass

- A -: Pfeil
- B -: Pfeil
- C -: Pfeil
- D -: Pfeil
- E -: Pfeil

## Patentansprüche

1. Abgasbaugruppe mit einem Abgaskrümmer (2), der mit einem Abgaseinlass (8) eines Verteilerbauteils (4) verbunden ist, wobei in dem Verteilerbauteil (4) ein Stellorgan (7) angeordnet ist, das dazu geeignet ist, Abgas einem Niedardruckanschluss (10) und/oder einem Hochdruckanschluss (9) des Verteilerbauteils (4) zuzuleiten, wobei hochdruckseitig ein Hochdruckturbinengehäuse (5) einer Hochdruckturbine mit dem Verteilerbauteil (4) verbunden ist und niederdruckseitig ein Niederdruckturbinengehäuse (6) einer Niederdruckturbine mit dem Verteilerbauteil (4) verbunden ist, und wobei ein Verbindungskanal (11) zumindest teilweise durch das Verteilerbauteil (4) verläuft und einen Hochdruckabgasauslass (20) des Hochdruckturbinengehäuses (5) mit einem Niederdruckabgaseinlass (39) des Niederdruckturbinengehäuses (6) verbindet, wobei das Verteilerbauteil (4) ein gegossenes Bauteil ist, **dadurch gekennzeichnet, dass** Innen- und Außengehäuse (19, 30; 23, 32) der Niederdruck- und Hochdruckturbine (13, 15) aus Blechschalen gebildet sind, wobei die Außengehäuse (32) der Niederdruck- und der Hochdruckturbinenstufe (13, 15) stoffschlüssig mit dem Außengehäuse (26) des Abgaskrümmers (2) verbunden sind, wobei das Außengehäuse (30, 32) der Niederdruck- und der Hochdruckturbine (13, 15) das Außengehäuse (26) des Abgaskrümmers (2) umgreift.

2. Abgasbaugruppe nach Anspruch 1, **dadurch gekennzeichnet, dass** das Verteilerbauteil (4) einen Bypasskanal (24) aufweist, durch welchen Abgas vom Hochdruckabgasauslass (20) des Hochdruckturbinengehäuses (5) unter Umgehung der Niederdruckturbine (15) in einen Abgasauslass (16) des Verteilerbauteils (4) einleitbar ist.

3. Abgasbaugruppe nach Anspruch 2, **dadurch gekennzeichnet, dass** der Bypasskanal (24) durch ein Bypassventil (25) sperrbar ist.

4. Abgasbaugruppe nach Anspruch 1 oder 2, **dadurch gekennzeichnet, dass** der Abgaskrümmer (2) einen Luftspalt (28) zwischen seinem Innengehäuse (27) und seinem Außengehäuse (26) aufweist, und dass die Niederdruck- und Hochdruckturbinengehäuse (5, 6) einen Luftspalt (29, 31) zwischen ihren Innen- und Außengehäusen (19, 30; 23, 32) aufweisen.

5. Abgasbaugruppe nach Anspruch 4, **dadurch gekennzeichnet, dass** der Luftspalt (28) im Abgaskrümmer (2) von den Luftspalten (29, 31) der Niederdruck- und Hochdruckturbinengehäuse (5, 6) getrennt ist.

6. Abgasbaugruppe nach einem der Ansprüche 1 bis 5, **dadurch gekennzeichnet, dass** das Verteilerbauteil (4) stoffschlüssig mit dem Niederdruckturbinengehäuse (6), dem Hochdruckturbinengehäuse (5) und dem Abgaskrümmer (2) verbunden ist.

7. Abgasbaugruppe nach einem der Ansprüche 1 bis 6, **dadurch gekennzeichnet, dass** die Innengehäuse 19,23 der Niederdruck- und Hochdruckturbinen (13, 15) unter Ausbildung eines Schiebesitzes 33. 34 mit dem Verteilerbauteil (4) verbunden sind.

8. Abgasbaugruppe nach einem der Ansprüche 1 bis 7, **dadurch gekennzeichnet, dass** das Innengehäuse (27) des Abgaskrümmers (2) unter Ausbildung eines Schiebesitzes mit dem Verteilerbauteil (4) verbunden ist.

9. Abgasbaugruppe nach einem der Ansprüche 1 bis 8 **dadurch gekennzeichnet, dass** der Verbindungskanal (11) einen aus Blech bestehenden Längenabschnitt (17) aufweist, der unter Ausbildung eines Schiebesitzes (18) mit dem Verteilerbauteil (4) verbunden ist.

10. Abgasbaugruppe nach einem der Ansprüche 1 bis 9, **dadurch gekennzeichnet, dass** der Niederdruckabgasauslass (40) der Niederdruckturbine (15) in einen Abgasauslass (16) des Verteilerbauteils (4) mündet.

## Claims

1. Exhaust assembly with an exhaust manifold (2) connected with an exhaust gas inlet (8) of a distributing housing (4), wherein an adjusting element (7) is arranged in the distributing housing (4) which is suitable for supplying exhaust gas to a low-pressure connection (10) and/or a high-pressure connection (9) of the distributing housing (4), wherein, on the high-pressure side, a high-pressure turbine housing (5) of a high-pressure turbine is connected with the distributing housing (4), and, on the low-pressure side, a low-pressure turbine housing (6) of a low-pressure turbine is connected with the distributing housing (4), and wherein a connecting channel (11) at least partly runs through the distributing housing (4) and connects a high-pressure exhaust gas outlet (20) of the high-pressure turbine housing (5) with a low-pressure exhaust gas inlet (39) of the low-pressure turbine housing (6), wherein the distributing housing (4) is a cast component, **characterised in that** inner and outer housings (19, 30; 23, 32) of the low-pressure and high-pressure turbine (13,15) are formed of metal shells, wherein the outer housings (32) of the low-pressure and high-pressure turbine stage (13,15) are bonded to the outer housing (26) of the exhaust manifold (2), wherein the outer housing (30, 32) of the low-pressure and high-pressure turbine (13, 15) embraces the outer housing (26) of the exhaust manifold (2).

2. Exhaust assembly according to claim 1, **characterised in that** the distributing housing (4) has a bypass channel (24) through which exhaust gas can be introduced from the high-pressure exhaust gas outlet (20) of the high-pressure turbine housing (5), bypassing the low-pressure turbine (15), into an exhaust gas outlet (16) of the distributing housing (4).

3. Exhaust assembly according to claim 2, **characterised in that** the bypass channel (24) can be blocked by a bypass valve (25).

4. Exhaust assembly according to claim 1 or 2, **characterised in that** the exhaust manifold (2) has an air gap (28) between its inner housing (27) and its outer housing (26), and **in that** the low-pressure and high-pressure turbine housings (5, 6) have an air gap (29, 31) between their inner and outer housings (19, 30; 23, 32).

5. Exhaust assembly according to claim 4, **characterised in that** the air gap (28) in the exhaust manifold (2) is separate from the air gaps (29, 31) of the low-pressure and high-pressure turbine housings (5, 6).

6. Exhaust assembly according to any one of claims 1 to 5, **characterised in that** the distributing housing (4) is bonded to the low-pressure turbine housing (6), the high-pressure turbine housing (5) and the exhaust manifold (2).

7. Exhaust assembly according to any one of claims 1 to 6, **characterised in that** the inner housings 19, 23 of the low-pressure and high-pressure turbines (13, 15) are connected with the distributing housing (4) to form a sliding seat 33, 34.

8. Exhaust assembly according to any one of claims 1 to 7, **characterised in that** the inner housing (27) of the exhaust manifold (2) is connected with the distributing housing (4) to form a sliding seat.

9. Exhaust assembly according to any one of claims 1 to 8, **characterised in that** the connecting channel (11) has a length (17) consisting of sheet metal which is connected with the distributing housing (4) to form a sliding seat (18).

10. Exhaust assembly according to any one of claims 1 to 9, **characterised in that** the low-pressure exhaust gas outlet (40) of the low-pressure turbine (15) leads into an exhaust gas outlet (16) of the distributing housing (4).

## Revendications

1. Module d'échappement avec un collecteur de gaz d'échappement (2) qui est relié à une entrée de gaz d'échappement (8) d'un élément répartiteur (4), dans lequel un organe de réglage (7) destiné à conduire des gaz d'échappement à un raccord à basse pression (10) et/ou à un raccord à haute pression (9) de l'élément répartiteur (4) est agencé dans l'élément répartiteur (4), dans lequel un carter de turbine à haute pression (5) d'une turbine à haute pression est relié côté haute pression à l'élément répartiteur (4) et un carter de turbine à basse pression (6) d'une turbine à basse pression est relié côté basse pression à l'élément répartiteur (4) et dans lequel un canal de liaison (11) s'étend au moins en partie à travers l'élément répartiteur (4) et relie une sortie de gaz d'échappement à haute pression (20) du carter de turbine à haute pression (5) à une entrée de gaz d'échappement à basse pression (39) du carter de turbine à basse pression (6), l'élément répartiteur (4) étant une pièce coulée, **caractérisé en ce que** les carters intérieurs et extérieurs (19, 30 ; 23, 32) des turbines à basse pression et à haute pression (13, 15) sont formés de coques de tôle, les carters extérieurs (32) des étages de turbines à basse pression et à haute pression (13, 15) étant assemblés par liaison de matière au carter extérieur (26) du collecteur de gaz d'échappement (2) et le carter extérieur (30, 32) des turbines à basse pression et à haute pression (13, 15) enveloppant le carter extérieur (26) du collecteur de gaz d'échappement (2).

2. Module de gaz d'échappement selon la revendication 1, **caractérisé en ce que** l'élément répartiteur (4) comporte un canal de dérivation (24) par lequel des gaz d'échappement peuvent être conduits de la sortie de gaz d'échappement à haute pression (20) du carter de turbine à haute pression (5) à une sortie de gaz d'échappement (16) de l'élément répartiteur (4) en contournant la turbine à basse pression (15).

3. Module d'échappement selon la revendication 2, **caractérisé en ce que** le canal de dérivation (24) peut être bloqué par une vanne de dérivation (25).

4. Module d'échappement selon la revendication 1 ou 2, **caractérisé en ce que** le collecteur de gaz d'échappement (2) comporte une fente d'air (28) entre son carter intérieur (27) et son carter extérieur (26) et **en ce que** les carters de turbines à basse pression et à haute pression (5, 6) comportent une fente d'air (29, 31) entre leurs carters intérieur et extérieur (19, 30 ; 23, 32).

5. Module d'échappement selon la revendication 4, **caractérisé en ce que** la fente d'air (28) dans le collecteur de gaz d'échappement (2) est séparée des fentes d'air (29, 31) des carters de turbines à basse pression et à haute pression (5, 6).

6. Module d'échappement selon l'une des revendications 1 à 5, **caractérisé en ce que** l'élément répartiteur (4) est assemblé par liaison de matière au carter de turbine à basse pression (6), au carter de turbine à haute pression (5) et au collecteur de gaz d'échappement (2).

7. Module d'échappement selon l'une des revendications 1 à 6, **caractérisé en ce que** les carters intérieurs 19, 23 des turbines à basse pression et à haute pression (13, 15) sont assemblés à l'élément répartiteur (4) en formant un logement coulissant 33, 34.

8. Module d'échappement selon l'une des revendications 1 à 7, **caractérisé en ce que** le carter intérieur (27) du collecteur de gaz d'échappement (2) est assemblé à l'élément répartiteur (4) en formant un logement coulissant.

9. Module d'échappement selon l'une des revendications 1 à 8, **caractérisé en ce que** le canal de liaison (11) comporte un tronçon longitudinal (17) qui est en tôle et qui est assemblé à l'élément répartiteur (4) en formant un logement coulissant (18).

10. Module d'échappement selon l'une des revendications 1 à 9, **caractérisé en ce que** la sortie de gaz d'échappement à basse pression (40) de la turbine à basse pression (15) débouche dans une sortie de gaz d'échappement (16) de l'élément répartiteur (4).
